# EUROPÄISCHE PATENTANMELDUNG

(11) **EP 4 644 718 A1**
(43) Veröffentlichungstag der Anmeldung: **05.11.2025**
(21) Anmeldenummer: 25173018.0
(22) Anmeldetag: 28.04.2025
(51) Int. Cl.: F16D 11/00, F16D 27/108, F16D 27/118

(54) **ELEKTROMAGNETISCH SCHALTBARE FORMSCHLUSSKUPPLUNG**

(30) Priorität: 03.05.2024 DE 102024112562
(71) Anmelder: HOERBIGER Antriebstechnik Holding GmbH, 86956 Schongau (DE)
(72) Erfinder: BINDER, Jürgen, 86956 Schongau (DE); ECHTLER, Peter, 86956 Schongau (DE); DEMPFLE, Andreas, 86956 Schongau (DE); FÜRGUTH, Werner, 86956 Schongau (DE); VOELK, Wolfgang, 86956 Schongau (DE); BUTORIN, Oleg, 86956 Schongau (DE); KUCHAREK, Sebastian, 86956 Schongau (DE); LAUTENSACH, Marco, 86956 Schongau (DE)
(74) Vertreter: Prinz & Partner mbB

(57) **Zusammenfassung**

Es ist eine elektromagnetisch schaltbare Formschlusskupplung (10) gezeigt. Die Formschlusskupplung (10) umfasst eine Schaltmuffe (18), die drehfest auf einer Welle angeordnet ist und entlang der Welle linear zwischen einer Einkupplungsposition und einer Auskupplungsposition verschiebbar ist, sowie wenigstens einen Kupplungskörper (14, 16), der koaxial zur Welle ausgerichtet ist. Zur Verstellung der Schaltmuffe (18) entlang der Welle umfasst die Formschlusskupplung (10) einen Stator (20) mit wenigstens einer bestromten Antriebsspule (22, 24). Dabei liegt in der Einkupplungsposition ein Formschluss zwischen der Schaltmuffe (18) und dem Kupplungskörper (14, 16) und damit eine Drehverbindung zwischen der Welle und dem Kupplungskörper (14, 16) vor. Außerdem umfasst die Formschlusskupplung (10) einen Differentialtransformator-Sensor (38) mit Spulen und einem Elektronikmodul (44), wobei der Differentialtransformator-Sensor (38) eingerichtet ist, die Kupplungsposition der Schaltmuffe (18) mittels der Spulen zu detektieren. Dabei ist das Elektronikmodul (44) dazu eingerichtet, das Ausgangssignal der Spulen in einen Gleichstromsignal umzuwandeln.

## Beschreibung

Die Erfindung betrifft eine elektromagnetisch schaltbare Formschlusskupplung.

Der Begriff "elektromagnetisch schaltbare Formschlusskupplung" soll dabei darauf abstellen, dass die Kupplung elektromagnetisch betätigt wird. Die Drehmomentübertragung bei geschlossener Kupplung erfolgt dabei durch einen Formschluss. Zu den Formschlusskupplungen zählen bspw. Zahnkupplungen sowie Klauenkupplungen.

Soll temporär Drehmoment von einer Welle auf eine andere, koaxial dazu ausgerichtete Welle übertragen werden, ohne dass diese beiden Wellen dauerhaft verbunden werden, so kommen typischerweise Kupplungen zum Einsatz. Hierbei wird zwischen reibschlüssigen und formschlüssigen Kupplungen unterschieden. Wie bereits vorhergehend erwähnt, beschränkt sich die vorliegende Erfindung dabei auf formschlüssige Kupplungen.

Für formschlüssige Kupplungen werden häufig verschiebbare Schaltmuffen eingesetzt. Diese weisen Verzahnungen auf, welche in Gegenverzahnungen eines abgetriebenen Kupplungskörpers greifen, sodass ein Formschluss entsteht, über den Drehmoment von einer auf eine andere Welle übertragen werden kann.

Aus dem Stand der Technik sind elektromagnetische Kupplungen bekannt, bei denen die Verstellung der Schaltmuffe über eine Spule erfolgt, die eine magnetische Kraft auf die Schaltmuffe ausübt. Bei derartigen Kupplungen kann die Schaltmuffe ausgehend von einer Auskupplungsposition in entgegengesetzte Richtungen bewegt werden, um die Schaltmuffe in Eingriff mit unterschiedlichen, axial beabstandeten Kupplungskörpern zu bringen.

Für einen bestmöglichen, elektronisch gesteuerten Kupplungsverlauf ist es notwendig, jederzeit die genaue Position der Schaltmuffe zu kennen. Für jeden an die elektromagnetisch schaltbare Formschlusskupplung zu übertragenden Steuerbefehl muss zunächst der aktuelle Schaltzustand analysiert werden, sodass die Steuerung jederzeit die Position der Schaltmuffe abfragen können muss.

Im Stand der Technik wird der Schaltzustand oder auch die Kupplungsposition der Schaltmuffe über indirekte Messungen bestimmt, beispielsweise durch den Stromzustand des Stators oder die Drehzahl der zu verbindenden Wellen.

Alternativ kann ein Sensor in einem Gehäuse der Formschlusskupplung integriert werden. Dabei handelt es sich allerdings ebenfalls um eine indirekte Messung, die über ein zusätzliches Betätigungsbauteil wie bspw. eine Scheibe, die mit einem verschiebbaren Teil, insbesondere der Schaltmuffe, gekoppelt ist, durchgeführt wird.

Um die Endlage der Schaltmuffe, das heißt eine Einkupplungsposition der Schaltmuffe zu bestimmen, können auch Schalter eingesetzt werden. Der Schalter wird dabei durch ein extra vorgesehenes, an der Schaltmuffe angebrachtes, eigenes Betätigungsteil betätigt, wenn die Schaltmuffe sich in der Einkupplungsposition befindet.

Alternativ zu einem Schalter kann auch ein Wegmesssystem eingesetzt werden, welches ebenfalls über ein zusätzliches Bauteil betätigt wird.

Somit zeichnen die sich im Stand der Technik bekannten Methoden zum Erfassen der Position der Schaltmuffe dadurch aus, dass es sich um indirekte Messungen handelt, die ein zusätzliches Bauteil benötigen. Eine direkte und genaue Bestimmung an der eigentlichen Kupplungsposition ist somit nicht möglich, sondern es werden immer zusätzliche Bauteile benötigt.

Hinzu kommt, dass die Erfassung der Position der Schaltmuffe üblicherweise in axialer Richtung stattfindet, sodass sich der benötigte Bauraum für die Formschlusskupplung erhöht.

Durch die zusätzlich benötigten Bauteile sowie den benötigten Bauraum erhöhen sich außerdem die Herstellkosten der Formschlusskupplung.

Hinzu kommt auch, dass diese Messmethoden oftmals eine genaue Kalibrierung des Sensors gegenüber der Messstelle benötigen, was üblicherweise sehr aufwendig und somit kostenintensiv ist.

Es ist somit eine Aufgabe der Erfindung, eine direkte Erfassung der Position der Schaltmuffe zu ermöglichen, ohne dass zusätzliche Bauteile benötigt werden, um die Kosten und den benötigten Bauraum möglichst gering zu halten.

Diese Aufgabe wird erfindungsgemäß gelöst durch eine elektromagnetisch schaltbare Formschlusskupplung. Die Formschlusskupplung umfasst eine Schaltmuffe, die drehfest auf einer Welle angeordnet ist und entlang der Welle linear zwischen einer Einkupplungsposition und einer Auskupplungsposition verschiebbar ist, sowie wenigstens einen Kupplungskörper, der koaxial zur Welle ausgerichtet ist. Zur Verstellung der Schaltmuffe entlang der Welle umfasst die Formschlusskupplung einen Stator mit wenigstens einer bestromten Antriebsspule. Dabei liegt in der Einkupplungsposition ein Formschluss zwischen der Schaltmuffe und dem Kupplungskörper und damit eine Drehverbindung zwischen der Welle und dem Kupplungskörper vor. Außerdem umfasst die Formschlusskupplung einen Differentialtransformator-Sensor mit Spulen und einem Elektronikmodul, wobei der Differentialtransformator-Sensor eingerichtet ist, die Kupplungsposition der Schaltmuffe mittels der Spulen zu detektieren. Dabei ist das Elektronikmodul dazu eingerichtet, das Ausgangssignal der Spulen in ein Gleichstromsignal umzuwandeln. Anders ausgedrückt, wird in der elektromagnetisch schaltbaren Formschlusskupplung ein Sensor verbaut, welcher auf dem Prinzip eines Differentialtransformators basiert, sodass über die Spulen des Differentialtransformators unmittelbar und ohne Zwischenschaltung eines eigenen, bewegten Teils die Kupplungsposition der Schaltmuffe erfasst werden kann, wobei das von dem Elektronikmodul umgewandelte Signal an eine Steuerung weitergeleitet werden kann, die anhand des Signals eine Position der Schaltmuffe erkennen und verarbeiten kann. Somit wird die Position der Schaltmuffe mittels einer direkten Messung durch den Differentialtransformator-Sensor erfasst, und die Anzahl an zusätzlich benötigten Bauteilen, und somit des benötigten Bauraums, kann reduziert werden. Außerdem handelt es sich bei einem Differentialtransformator-Sensor um einen gängigen Sensor, der die Kosten für die Formschlusskupplung nicht merklich erhöht.

Ein Differentialtransformator-Sensor ist ein elektromechanischer Wegmesser, der auch als linear variabler Differentialtransformator (LVDT) bezeichnet wird. Dementsprechend handelt es sich also um einen analogen Sensor zur Wegmessung, dessen Auflösung hauptsächlich durch die angeschlossene Elektronik beschränkt wird.

Der Grundgedanke der Erfindung ist es also, mittels des Differentialtransformator-Sensors die Kupplungsposition der Schaltmuffe direkt zu bestimmen und zusätzliche Bauteile zu vermeiden.

Gemäß einer Ausführungsform umfassen die Spulen des Differentialtransformator-Sensors eine Primärspule sowie zwei Sekundärspulen, zwischen denen die Primärspule positioniert ist. Der Differentialtransformator-Sensor umfasst demnach lediglich drei Spulen, sodass die Kosten geringgehalten werden können. Vorzugsweise weisen die Sekundärspulen jeweils den gleichen Abstand zu der Primärspule auf, um einen Offset zu vermeiden, und sind gegenphasig in Reihe geschaltet.

Üblicherweise umfassen Differentialtransformator-Sensoren außerdem einen Anker. Dieser Anker wird bei der Formschlusskupplung durch die Schiebemuffe bereitgestellt, welche aus einem weichmagnetischen Material besteht.

Alternativ, wenn die Verschiebung der Schaltmuffe indirekt über einen Anker stattfindet, besteht der Anker aus einem weichmagnetischen Material und dient als Anker für den Differentialtransformator-Sensor.

Zum Detektieren der Position der Schaltmuffe wird die Primärspule des Differentialtransformators mit einem konstanten Wechselstrom versorgt. In der Auskupplungsposition befindet sich die Schaltmuffe dabei mittig zwischen den beiden Sekundärspulen, sodass kein Signal von dem Differentialtransformator-Sensor ausgegeben wird.

Wird die Schaltmuffe allerdings verschoben, so wird basierend auf der Position der Schaltmuffe ein Strom in den Sekundärspulen induziert und es kann eine Ausgangsspannung zwischen den beiden Sekundärspulen gemessen werden. Die Phase der induzierten Spannung hängt dabei von der Bewegungsrichtung der Schaltmuffe ab, während die Amplitude sich in Abhängigkeit von der Verschiebung der Schaltmuffe verändert.

Da das Ausgangssignal der Sekundärspulen aufgrund des Wechselstrom-Erregungssignals ebenfalls ein Wechselstromsignal ist, wird das Signal von dem Elektronikmodul in ein Gleichstromsignal umgewandelt, welches weiterverarbeitet werden kann.

Wie bereits erwähnt, kann gemäß einer Ausführungsform die Verstellung der Schaltmuffe auch indirekt durch einen Anker erfolgen. In diesem Fall kann die Position des Ankers von dem Differentialtransformator-Sensor detektiert werden, wobei die Position des Ankers die Position der Schaltmuffe angibt.

Gemäß einer bevorzugten Ausführungsform sind die Spulen planare Spulen, welche auf einer Spulenplatine angeordnet sind. Durch die Verwendung von planaren Spulen kann der benötigte Bauraum deutlich reduziert werden, da lediglich eine Platine in der Formschlusskupplung verbaut werden muss. Bei der Verwendung von planaren Spulen handelt es sich bei der Primärspule um eine rechteckige Spule. Die Sekundärspulen sind dabei innerhalb der rechteckigen Primärspule angeordnet und weisen eine Sinus- bzw. eine Cosinus-Geometrie auf. Auch hier wird ein Strom in den Sekundärspulen induziert, wenn sich die Schaltmuffe aus der Auskupplungsposition verschiebt.

Das Elektronikmodul kann auf einer separaten Elektronikplatine oder ebenfalls auf der Spulenplatine angeordnet sein. Durch die Möglichkeit, eine separate Elektronikplatine zu verwenden oder alternativ das Elektronikmodul auf der Spulenplatine anzuordnen, ergeben sich mehr Möglichkeiten zur Positionierung des Differentialtransformator-Sensors in der Formschlusskupplung. Die genaue Gestaltung des Differentialtransformator-Sensors hängt somit von dem verfügbaren Bauraum innerhalb der Formschlusskupplung ab. Die Anordnung des Differentialtransformator-Sensors ist also flexibel dank der möglichen Aufteilung in eine Spulenplatine und eine Elektronikplatine.

Gemäß einer Ausführungsform ist das Elektronikmodul auf der separaten Elektronikplatine angeordnet, wobei die Spulenplatine zwischen der wenigstens einen Antriebsspule und der Schaltmuffe angeordnet ist, während die Elektronikplatine radial außerhalb der wenigstens einen Antriebsspule angeordnet ist. Dementsprechend kommt es zu einer räumlichen Trennung zwischen der Spulenplatine und der Elektronikplatine, wodurch der benötigte Bauraum zwischen der Schaltmuffe und der Antriebsspule zum Verbauen des Differentialtransformator-Sensors geringer ausfallen kann.

Die Spulenplatine und die Elektronikplatine können dabei über ein Kabel miteinander verbunden sein, das seitlich an der Antriebsspule vorbei verläuft. Somit kann weiterhin das Ausgangssignal von dem Elektronikmodul in ein Gleichstromsignal umgewandelt und weitergeleitet werden. Durch die seitliche Führung des Kabels kann außerdem sichergestellt werden, dass der Aufbau der Formschlusskupplung an sich nicht abgeändert werden muss, sodass auch eine Reparatur oder ein Nachrüsten ohne Probleme möglich ist.

Alternativ zu einem Kabel, welches die beiden Platinen miteinander verbindet, kann auch eine 3D-Platine verwendet werden. Dabei handelt es sich um eine Starr-Flex-Leiterkarte, in deren Verbindung die benötigten Leitungen umfasst sind.

Gemäß einer Ausführungsform umfasst die Formschlusskupplung zwei Differentialtransformator-Sensoren, die in Umfangsrichtung versetzt zueinander angeordnet sind. Da jeder Sensor lediglich die Position der Schaltmuffe an der dem Sensor zugeordneten Messstelle detektieren kann, kann mit einem Differentialtransformator-Sensor kein Kippen der Schaltmuffe detektiert werden. Dagegen kann durch das Verwenden von zwei Differentialtransformator-Sensoren jedoch festgestellt werden, ob die Schaltmuffe aufgrund des Passungsspiels und/oder der Schwerkraft gekippt ist, sodass ein verfälschtes Messergebnis verhindert werden kann. Zusätzlich kann somit eine mögliche Fehlstellung, d. h. ein mögliches Verkippen, der Schaltmuffe schnellstmöglich behoben werden.

Vorzugsweise sind die zwei Differentialtransformator-Sensoren dabei in einem Winkel von 180 Grad zueinander versetzt. Insbesondere bei einem Verkippen kann dabei die maximale Differenz der Positionen der Schaltmuffe festgestellt werden.

Der Differentialtransformator-Sensor kann in einem Sensorgehäuse angeordnet sein, wobei das Sensorgehäuse in einem Getriebegehäuse oder am Stator, insbesondere an einem Statorgehäuse, befestigt werden kann. Der gewählte Befestigungsort für das Sensorgehäuse hängt von der Ausgestaltung der Formschlusskupplung ab und kann je nach verfügbarem Bauraum gewählt werden, solange der Differentialtransformator-Sensor radial außen entlang des Umfangs der Schaltmuffe angeordnet wird.

Wichtig dabei ist, dass der Differentialtransformator-Sensor über ein Kabel und/oder einen Stecker kontaktiert werden kann, um die Primärspule mit einem Wechselstrom zu versorgen und das Ausgangssignal der Sekundärspulen nach der Umwandlung durch das Elektronikmodul weiterzuleiten.

Gemäß einer Ausführungsform ist die elektromagnetisch schaltbare Formschlusskupplung mit einer Steuerung verbunden, die insbesondere mit dem Elektronikmodul des Differentialtransformator-Sensors signaltechnisch verbunden ist. Das Elektronikmodul ist dabei eingerichtet, die von der Spulenanordnung erfasste Position der Schaltmuffe mittels des umgewandelten Gleichstromsignals an die Steuerung weiterzuleiten. Die Steuerung wiederum ist eingerichtet, einen Kupplungsvorgang basierend auf der Position der Schaltmuffe zu steuern. Somit können ein möglichst reibungsloser Ablauf des Kupplungsvorgangs sowie eine möglichst schnelle Fehlerbehebung, beispielsweise im Falle von Verkippen der Spule, sichergestellt werden.

Weitere Vorteile und Merkmale der Erfindung ergeben sich aus der nachfolgenden Beschreibung und aus den beiliegenden Zeichnungen, auf die Bezug genommen wird. In den Zeichnungen zeigen:
- Figur 1 eine Explosionsansicht einer erfindungsgemäßen elektromagnetisch schaltbaren Formschlusskupplung gemäß einer ersten Ausführungsform,
- Figur 2 eine detaillierte Schnittdarstellung durch den Stator und die Schaltmuffe der Formschlusskupplung gemäß einer zweiten Ausführungsform,
- Figur 3 eine schematische Darstellung einer bei der Erfindung genutzten Spulenplatine, und
- Figur 4 eine perspektivische Darstellung von zwei miteinander verbundenen Differentialtransformator-Sensoren.

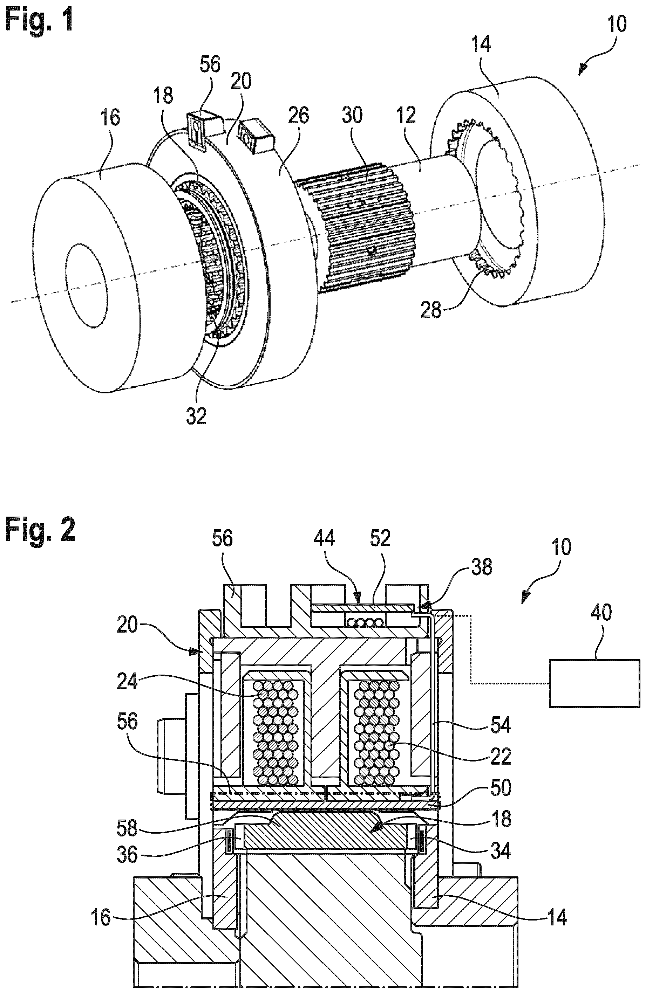

Figur 1 zeigt eine elektromagnetisch schaltbare Formschlusskupplung 10. Bei der hier gezeigten Formschlusskupplung 10 handelt es sich um eine elektromagnetische Zahnkupplung mit radial nach innen und radial nach außen ragenden Zähnen, die ineinandergreifen.

Allgemein ist unter einer Formschlusskupplung 10 eine Kupplung zu verstehen, bei der eine Kupplungsposition mittels eines Formschlusses gehalten wird, also normalerweise über Verzahnungen.

Die Formschlusskupplung 10 umfasst eine Welle 12, einen ersten Kupplungskörper 14, einen zweiten Kupplungskörper 16, dazwischen eine Schaltmuffe 18 und einen Stator 20.

Im Stator 20 sind eine erste bestrombare Antriebsspule 22 und daneben eine zweite bestrombare Antriebsspule 24 untergebracht, die in Figur 2 zu sehen sind. Zudem umfasst der Stator 20 ein Statorgehäuse 26 aus Stahl, das zusammen mit den Antriebsspulen 22, 24 einen Elektromagneten bildet.

Durch Bestromen der Antriebsspulen 22, 24 kann eine Schaltkraft bewirkt werden.

Die Kupplungskörper 14, 16 sind axial voneinander beabstandet und jeweils koaxial zur Welle 12 ausgerichtet. Dies wird anhand der Darstellung in Figur 1 deutlich.

Jeder Kupplungskörper 14, 16 weist eine Innenverzahnung 28 auf.

Die Schaltmuffe 18 ist drehfest auf der Welle 12 angeordnet und entlang der Welle 12 linear zwischen einer ersten Einkupplungsposition, einer zweiten Einkupplungsposition und einer zwischen den Einkupplungspositionen liegenden Auskupplungsposition, auch Neutralposition genannt, verschiebbar. Die verschiedenen Kupplungspositionen werden nachfolgend noch näher erläutert.

Die Verschiebung der Schaltmuffe 18 erfolgt im Ausführungsbeispiel direkt, d. h. die Schaltmuffe 18 lässt sich durch Bestromung der Antriebsspulen 22, 24 axial verschieben, indem das von einer Antriebsspule 22, 24 erzeugte Magnetfeld eine Kraft auf die Schaltmuffe 18 ausübt.

Dementsprechend ist die Schaltmuffe 18 aus einem weichmagnetischen Metall gefertigt.

Es ist jedoch auch denkbar, dass die Schaltmuffe 18 indirekt mittels eines Ankers verschoben werden kann. In diesem Fall kann die Schaltmuffe 18 aus einem beliebigen Material gebildet sein, während der mit ihr gekoppelte Anker aus einem weichmagnetischen Material bestehen muss, um durch das von den Antriebsspulen 22, 24 erzeugte Magnetfeld verschoben werden zu können.

Auch ist es denkbar, dass der Stator 20 lediglich eine Antriebsspule 22, 24 aufweist, wobei die Schaltmuffe 18 dann lediglich zwischen einer Einkupplungsposition und einer Auskupplungsposition verschoben werden kann. Das heißt, die Formschlusskupplung 10 umfasst lediglich einen Kupplungskörper 14, 16.

In der in Figur 1 gezeigten Ausführungsform hat die Welle 12 zwischen den Kupplungskörpern 14, 16 eine Außenverzahnung 30, die in permanentem Eingriff mit einer Innenverzahnung 32 der Schaltmuffe 18 ist.

An ihren entgegengesetzten stirnseitigen Enden hat die Schaltmuffe 18 jeweils eine erste Verzahnung 34 und eine zweite Verzahnung 36, die jeweils als Außenverzahnung ausgebildet sind. Diese dienen zum drehmomentübertragenden Eingriff in die Innenverzahnungen 28 der Kupplungskörper 14, 16, um zwischen der Schaltmuffe 18 und den Kupplungskörpern 14, 16 ein Drehmoment zu übertragen, wenn die Schaltmuffe 18 in einer Einkupplungsposition ist.

Die erste Verzahnung 34 und die zweite Verzahnung 36 sind insbesondere Ringverzahnungen mit radial nach innen und radial nach außen weisenden Zähnen.

Alternativ zu der in Figur 1 gezeigten Ausführungsform der Formschlusskupplung 10, können die beiden Kupplungskörper 14, 16 auch eine Außenverzahnung aufweisen, wobei die Außenverzahnung in eine Innenverzahnung der Schaltmuffe 18 eingreift, wie in Figur 2 zu sehen ist.

Die Funktion der Formschlusskupplung 10 ändert sich dabei nicht.

Der Unterschied liegt lediglich darin, dass die Schaltmuffe 18 eine Innenverzahnung aufweist, welche auch zum drehmomentübertragenden Eingriff in die Außenverzahnung einer der beiden Kupplungskörper 14, 16 dient.

Auch bei dieser Ausführungsform der Formschlusskupplung 10 können die Verzahnungen als umlaufende Ringverzahnung ausgebildet sein und/oder in Richtung zur Einkupplungsposition Hinterschnitte aufweisen.

Wie insbesondere in der in Figur 2 gezeigten Ausführungsform zu sehen ist, umfasst die Formschlusskupplung 10 außerdem einen Differentialtransformator-Sensor 38.

Insbesondere handelt es sich bei dem Differentialtransformator-Sensor 38 um einen linear variablen Differentialtransformator (LVDT), welcher ein analoger, elektromechanischer Wegmesser ist.

Mit dem Differentialtransformator-Sensor 38 kann die Kupplungsposition der Schaltmuffe 18 detektiert und an eine Steuerung 40, die basierend auf der Kupplungsposition der Schaltmuffe 18 einen Kupplungsvorgang steuern kann, weitergeleitet werden.

Der Differentialtransformator-Sensor 38 umfasst Spulen 42 zum Detektieren der Position der Schaltmuffe 18, und ein Elektronikmodul 44, das mit der Steuerung 40 signaltechnisch gekoppelt ist und das Ausgangssignal der Spulen 42 in ein Gleichstromsignal umwandelt und an die Steuerung 40 weiterleitet.

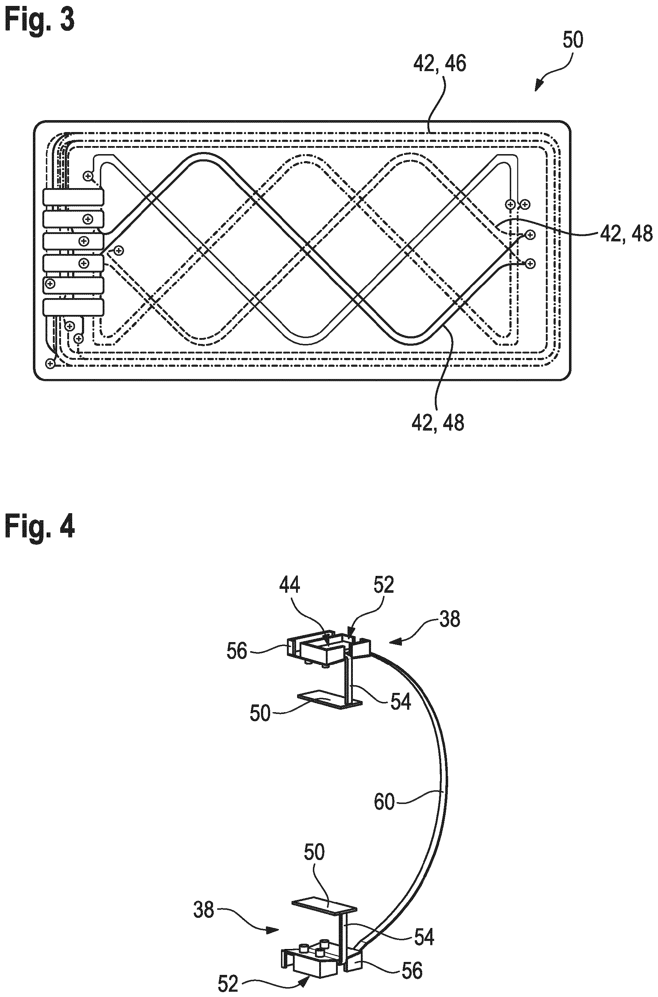

Dabei weist der Differentialtransformator-Sensor 38, wie in Figur 3 zu sehen ist, insbesondere eine Primärspule 46 sowie zwei Sekundärspulen 48 auf.

Um den Differentialtransformator-Sensor 38 möglichst klein zu halten und nur einen minimalen Bauraum zu benötigen, sind die Spulen 42 vorzugsweise planare Spulen, die auf einer Spulenplatine 50 angeordnet sind, welche in Figur 3 gezeigt ist.

In Figur 3 ist ein Beispiel einer solchen Spulenplatine 50 gezeigt. Dabei ist zu erkennen, dass die Primärspule 46 einer äußeren rechteckigen Spule entspricht, während die Sekundärspulen 48 innerhalb dieser äußeren rechteckigen Primärspule 46 angeordnet sind. Die Sekundärspulen 48 weisen dabei eine Sinus- oder Cosinus-Geometrie auf.

Die Sekundärspulen 48 sind dabei gegenphasig in Reihe geschaltet.

In der in den Figuren gezeigten Ausführungsform ist das Elektronikmodul 44 auf einer separaten Elektronikplatine 52 angeordnet.

Alternativ kann das Elektronikmodul 44 jedoch auch auf der Spulenplatine 50 angeordnet sein.

Wie insbesondere in Figur 2 zu sehen ist, ist die Spulenplatine 50 radial zwischen der Schaltmuffe 18 und den Antriebsspulen 22, 24 angeordnet. Die Elektronikplatine 52 ist dagegen radial außerhalb der Antriebsspulen 22, 24 positioniert.

Um die Spulenplatine 50 und die Elektronikplatine 52 miteinander zu verbinden, verläuft ein Kabel 54 seitlich an einer der Antriebsspulen 22, 24 vorbei.

Durch die Aufteilung des Differentialtransformator-Sensors 38 in eine Spulenplatine 50 und eine Elektronenplatine 52 kann der Differentialtransformator-Sensor 38 möglichst platzsparend in der Formschlusskupplung 10 verbaut werden. Außerdem ergeben sich hierdurch mehr Anordnungsmöglichkeiten, als wenn das Elektronikmodul 44 ebenfalls auf einer Spulenplatine 50 angeordnet ist, welche dementsprechend größer sein muss.

Der Differentialtransformator-Sensor 38 ist in einem Sensorgehäuse 56 angeordnet, um das Elektronikmodul 44 sowie die Spulen 42 zu schützen.

Je nach Ausführungsform des Differentialtransformator-Sensors 38 können auch zwei Sensorgehäuse 56 vorhanden sein, d. h. ein Gehäuse für die Spulenplatine 50 und ein Gehäuse für die Elektronikplatine.

Alternativ kann der Differentialtransformator-Sensor 38 auch durch 3D-Platinen gebildet sein, welche über elektrische Leitungen sowie Signalleitungen miteinander verbunden sind.

Der Differentialtransformator-Sensor 38 ist vorzugsweise fest am Stator 20 befestigt. Das heißt, auch während eines Kupplungsvorgangs, bewegt sich der Differentialtransformator-Sensor 38 nicht.

Alternativ kann der Differentialtransformator-Sensor 38 auch in einem Getriebegehäuse (nicht gezeigt) der Formschlusskupplung 10 befestigt sein.

Um mit dem Differentialtransformator-Sensor 38 eine Position bestimmen zu können, wird ein Anker benötigt, der relativ zu den Spulen 42 bewegbar ist. In der Formschlusskupplung 10 dient die Schaltmuffe 18 selbst als Anker 58 für den Differentialtransformator-Sensor 38, weshalb die Schaltmuffe 18 vorzugsweise aus einem weichmagnetischen Material ist.

Für eine Messung mit dem Differentialtransformator-Sensor 38 wird eine Wechselspannung an der Primärspule 46 angelegt. Bei einer Verschiebung des Ankers 58, in diesem Fall der Schaltmuffe 18, wird ein Strom in den Sekundärspulen 48 induziert, wodurch das Elektronikmodul 44 ein Ausgangssignal erhält.

Da die Primärspule 46 mit einem Wechselstrom beaufschlagt wird, handelt es sich auch bei dem Ausgangssignal der Sekundärspulen 48 um ein Wechselstromsignal, welches zunächst von dem Elektronikmodul 44 in ein Gleichstromsignal umgewandelt werden muss, um von der Steuerung 40 verarbeitet werden zu können.

Das Ausgangssignal der Sekundärspulen 48 ist von der Richtung der Verschiebung sowie dem Kupplungsweg abhängig, sodass basierend auf dem Ausgangssignal die genaue Position der Schaltmuffe 18 bestimmt werden kann.

Insbesondere gibt die Richtung der Verschiebung die Phase und der Kupplungsweg die Amplitude des Ausgangssignals vor.

Nachfolgend wird ein Kupplungsvorgang der Formschlusskupplung 10 beschrieben.

In Figur 2 ist die Formschlusskupplung 10 in einer Neutralstellung gezeigt, in der die Schaltmuffe 18 in der Auskupplungsposition ist. Man spricht bei der im Ausführungsbespiel gezeigten Formschlusskupplung 10 von einer "normally open"-Kupplung.

In der Auskupplungsposition befindet sich die Schaltmuffe 18, wie in Figur 2 zu sehen ist, mittig zwischen den beiden Antriebsspulen 22, 24.

Ebenso befindet sich die Schaltmuffe 18 mittig unterhalb der Spulenplatine 50 und somit mittig in Bezug auf die Sekundärspulen 48 des Differentialtransformator-Sensors 38. Somit wird auch bei einer Bestromung der Primärspule 46 kein Ausgangssignal in den beiden Sekundärspulen 48 erzeugt.

Wird die Formschlusskupplung 10 geschaltet, beispielsweise durch Bestromen der ersten Antriebsspule 22, wird eine magnetische Kraft auf die Schaltmuffe 18 ausgeübt, die sich infolgedessen verschiebt, beispielsweise in Richtung des ersten Kupplungskörpers 14.

Wird statt der ersten Antriebsspule 22 die zweite Antriebsspule 24 bestromt, so wird ebenfalls eine magnetische Kraft auf die Schaltmuffe 18 ausgeübt. Allerdings verschiebt sich die Schaltmuffe 18 infolgedessen dann nicht in Richtung des ersten Kupplungskörpers 14, sondern in Richtung des zweiten Kupplungskörpers 16.

Durch die Verschiebung der Schaltmuffe 18 gelangt die erste Verzahnung 34 der Schaltmuffe 18 in Eingriff mit der Innenverzahnung 28 des ersten Kupplungskörpers 14.

Bei der Verschiebung der Schaltmuffe 18 kann zunächst der Zustand eintreten, in dem die Schaltmuffe 18 mit ihrer ersten Verzahnung 34 an einer Stirnseite des ersten Kupplungskörpers 14 anstößt, bis die Ausrichtung der Innenverzahnung 28 des ersten Kupplungskörpers 14 und die erste Verzahnung 34 der Schaltmuffe 18 ein Eingreifen ermöglichen und die Schaltmuffe 18 in Eingriff mit der Innenverzahnung 28 des ersten Kupplungskörpers 14 bewegt wird.

Sobald die Schaltmuffe 18 in Überdeckung mit dem ersten Kupplungskörper 14 gelangt, wird die Schaltmuffe 18 aufgrund der Form der Innenverzahnung 28 des ersten Kupplungskörpers 14 sowie der ersten Verzahnung 34 der Schaltmuffe 18 weiter zum ersten Kupplungskörper 14 hingezogen, bis die Schaltmuffe 18 am ersten Kupplungskörper 14 anstößt.

Dies kann konkret dadurch erreicht werden, dass die Innenverzahnung 28 der Kupplungskörper 14, 16 und die erste Verzahnung 34 der Schaltmuffe 18 in Richtung zur Einkupplungsposition hin Hinterschnitte aufweisen, die derart ausgebildet sind, dass eine Drehmomentübertragung zwischen der Welle 12 oder der Schaltmuffe 18 und einem Kupplungskörper 14, 16 eine Kraft auf die Schaltmuffe 18 in Richtung der Einkupplungsposition erzeugt.

Der Kupplungsweg der Schaltmuffe 18 ist in Richtung der Einkupplungsposition durch einen Anschlag der Schaltmuffe 18 an dem ersten Kupplungskörper 14 begrenzt.

Wie bereits erwähnt, dient die Schaltmuffe 18 als magnetisch leitfähiger Anker 58 für den Differentialtransformator-Sensor 38.

Durch die Bestromung einer der Antriebsspulen 22, 24 und der daraus resultierenden Verschiebung der Schaltmuffe 18 wird in den Sekundärspulen 48 ein Wechselstrom induziert.

Das Wechselstromsignal wird von dem Elektronikmodul 44 in ein Gleichstromsignal umgewandelt und an die Steuerung 40 weitergeleitet.

Für die Übertragung des Gleichstromsignals ist das Elektronikmodul 44 also signaltechnisch mit der Steuerung 40 gekoppelt.

Basierend auf der Phase und der Amplitude des Ausgangssignals kann die genaue Kupplungsposition der Schaltmuffe 18 bestimmt werden. Dabei hängt die Phase von der Bewegungsrichtung und die Amplitude von der Stärke der Verschiebung ab.

Zum Öffnen der Formschlusskupplung 10 wird die Schaltmuffe 18 wiederum durch Bestromen der zweiten Antriebsspule 24 in eine Auskupplungsrichtung bewegt, insbesondere so weit, bis ein entsprechendes Signal durch den Differentialtransformator-Sensor 38 abgegeben wird, der diese Position verifiziert hat.

Auch durch diese Bewegung der Schaltmuffe 18 in die Gegenrichtung wird in den Sekundärspulen 48 ein Strom induziert, wobei sich jedoch bei einem Verschieben aus der ersten Einkupplungsposition zur Auskupplungsposition die Phase des Ausgangssignals nicht ändert, die Amplitude jedoch abnimmt.

Um die Schaltmuffe 18 in die Auskupplungsposition zurückzubewegen, wird die Bestromung der Antriebsspule 24 eingestellt, sodass beide Antriebsspulen 22, 24 unbestromt sind und die Schaltmuffe 18 in ihre Ausgangsposition zurückkehren kann.

Für diese Rückstellung der Schaltmuffe 18 können Federelemente (nicht gezeigt), insbesondere Wellenfedern, vorgesehen sein, welche in Richtung der Auskupplungsposition vorgespannt sind.

Wenn ein solches Federelement vorgesehen ist, muss die von der oder den Antriebsspulen 22, 24 aufgebrachte Magnetkraft größer sein als die Federkraft, damit die Schaltmuffe 18 in Richtung einer der Einkupplungspositionen verschoben wird.

Durch Bestromung der zweiten Antriebsspule 24 kann die Schaltmuffe 18 auf gleiche Weise in Eingriff mit dem zweiten Kupplungskörper 16 gebracht werden, da die Schaltmuffe 18 durch Bestromen der jeweils anderen Antriebsspule 22, 24 in die entgegengesetzte Richtung ausgelenkt.

Neben der vorhergehend beschrieben direkten Verschiebung der Schaltmuffe 18, kann die Schaltmuffe 18 auch indirekt verschoben werden. Bei einer indirekten Verschiebung der Schaltmuffe 18 mittels eines Ankers ist der Anker aus einem weichmagnetischen Metall geformt und dient als magnetisch leitfähiger Anker 58 für den Differentialtransformator-Sensor 38.

Wie in der in Figur 4 gezeigten Ausführungsform schematisch angedeutet ist, kann die Formschlusskupplung 10 auch zwei Differentialtransformator-Sensoren 38 umfassen.

Die zwei Differentialtransformator-Sensoren 38 sind dabei in Umfangsrichtung der Schaltmuffe 18 versetzt zueinander angeordnet, das heißt, sie befinden sich an unterschiedlichen Stellen der Schaltmuffe 18.

Vorzugsweise sind die zwei Differentialtransformator-Sensoren 38 mit einem Winkel von 180° in Umfangsrichtung voneinander versetzt platziert.

Dabei können die zwei Differentialtransformator-Sensoren 38 über ein Kabel 60 miteinander verbunden sein, sodass die Differentialtransformator-Sensoren 38 insbesondere signaltechnisch miteinander gekoppelt sind.

Dadurch kann optional nur ein Elektronikmodul 44 für beide Differentialtransformator-Sensoren 38 verwendet werden, oder jeder Sensor 38 hat sein eigenes Elektronikmodul, wie in Figur 4 anhand der beiden Elektronikplatinen 52 und ihrer sie umgebenden Sensorgehäuse 56 gezeigt ist. Das Sensorgehäuse 56 ist im oder am Statorgehäuse 26 gehaltert, wie in Figur 1 zu sehen ist.

Alternativ kann auch jeder der Differentialtransformator-Sensoren 38 separat signaltechnisch mit der Steuerung 40 verbunden sein, sodass das jeweilige Elektronikmodul 44 das umgewandelte Gleichstromsignal der Spulen 42 an die Steuerung 40 weiterleiten kann.

Durch die Verwendung von zwei Differentialtransformator-Sensoren 38 kann neben der Kupplungsposition der Schaltmuffe 18 auch ein eventuelles Verkippen oder Verkanten der Schaltmuffe 18 mittels der Spulen 42 detektiert werden, da die Differentialtransformator-Sensoren 38 unterschiedliche Positionen der Schaltmuffe 18 detektieren.

Somit kann von der Steuerung 40 unverzüglich ein entsprechendes Signal zum Ausgleich der Kippstellung der Schaltmuffe 18 ausgegeben werden, um ein optimales Kupplungsverhalten der Formschlusskupplung 10 sicherzustellen.

## Patentansprüche

1. Elektromagnetisch schaltbare Formschlusskupplung (10), mit
einer Schaltmuffe (18), die drehfest auf einer Welle (12) angeordnet ist und entlang der Welle (12) linear zwischen einer Einkupplungsposition und einer Auskupplungsposition verschiebbar ist,
wenigstens einem Kupplungskörper (14, 16), der koaxial zur Welle (12) ausgerichtet ist,
einem Stator (20) mit wenigstens einer bestrombaren Antriebsspule (22, 24) zur Verstellung der Schaltmuffe (18) entlang der Welle (12),
wobei in der Einkupplungsposition ein Formschluss zwischen der Schaltmuffe (18) und dem Kupplungskörper (14, 16) und damit eine Drehverbindung zwischen der Welle (12) und dem Kupplungskörper (14, 16) vorliegt, und
einem Differentialtransformator-Sensor (38) mit Spulen (42) und einem Elektronikmodul (44), wobei der Differentialtransformator-Sensor (38) eingerichtet ist, die Kupplungsposition der Schaltmuffe (18) mittels der Spulen (42) zu detektieren, und wobei das Elektronikmodul (44) dazu eingerichtet ist, das Ausgangssignal der Spulen (42) in ein Gleichstromsignal umzuwandeln.

2. Elektromagnetisch schaltbare Formschlusskupplung (10) nach Anspruch 1, **dadurch gekennzeichnet, dass** die Spulen (42) eine Primärspule (46) sowie zwei Sekundärspulen (48) umfassen.

3. Elektromagnetisch schaltbare Formschlusskupplung (10) nach Anspruch 1 oder 2, **dadurch gekennzeichnet, dass** die Spulen (42) planare Spulen sind, die auf einer Spulenplatine (50) angeordnet sind.

4. Elektromagnetisch schaltbare Formschlusskupplung (10) nach Anspruch 3, **dadurch gekennzeichnet, dass** das Elektronikmodul (44) auf einer separaten Elektronikplatine (52) oder ebenfalls auf der Spulenplatine (50) angeordnet ist.

5. Elektromagnetisch schaltbare Formschlusskupplung (10) nach Anspruch 4, **dadurch gekennzeichnet, dass** das Elektronikmodul (44) auf einer separaten Elektronikplatine (52) angeordnet ist und die Spulenplatine (50) zwischen der wenigstens einen Antriebsspule (22, 24) und der Schaltmuffe (18) angeordnet ist und die Elektronikplatine (52) radial außerhalb der wenigstens einen Antriebsspule (22, 24) angeordnet ist.

6. Elektromagnetisch schaltbare Formschlusskupplung (10) nach Anspruch 4 oder 5, **dadurch gekennzeichnet, dass** die Spulenplatine (50) und die Elektronikplatine (52) über ein Kabel (54) miteinander verbunden sind, wobei das Kabel (54) seitlich an der Antriebsspule (22, 24) vorbei verläuft.

7. Elektromagnetisch schaltbare Formschlusskupplung (10) nach einem der vorhergehenden Ansprüche, **dadurch gekennzeichnet, dass** die elektromagnetische Kupplung zwei Differentialtransformator-Sensoren (38) umfasst, die in Umfangsrichtung versetzt zueinander angeordnet sind.

8. Elektromagnetisch schaltbare Formschlusskupplung (10) nach Anspruch 7, **dadurch gekennzeichnet, dass** die zwei Differentialtransformator-Sensoren (38) mit einem Winkel von 180 Grad zueinander versetzt sind.

9. Elektromagnetisch schaltbare Formschlusskupplung (10) nach einem der vorhergehenden Ansprüche, **dadurch gekennzeichnet, dass** der Differentialtransformator-Sensor (38) in einem Sensorgehäuse (56) angeordnet ist, wobei das Sensorgehäuse (56) in einem Getriebegehäuse oder am Stator (20) befestigt ist.

10. Elektromagnetisch schaltbare Formschlusskupplung (10) nach einem der vorhergehenden Ansprüche, **dadurch gekennzeichnet, dass** die elektromagnetisch schaltbare Formschlusskupplung (10) mit einer Steuerung (40) verbunden ist, die mit dem Elektronikmodul (44) des Differentialtransformator-Sensors (38) signaltechnisch verbunden ist, wobei das Elektronikmodul (44) eingerichtet ist, die von den Spulen (42) erfasste Position der Schaltmuffe (18) mittels des umgewandelten Gleichstromsignals an die Steuerung (40) weiterzuleiten, und wobei die Steuerung (40) eingerichtet ist, einen Kupplungsvorgang basierend auf der Position der Schaltmuffe (18) zu steuern.
